## Europäisches Patentamt

## European Patent Office

## Office européen des brevets

(19)

(11) Veröffentlichungsnummer: **0 265 647**

**A1**

(12) **EUROPÄISCHE PATENTANMELDUNG**

(21) Anmeldenummer: **87113427.6**

(22) Anmeldetag: **15.09.87**

(51) Int. Cl.⁴: **B62D 25/16**

(30) Priorität: **02.10.86 DE 8626339 U**

(43) Veröffentlichungstag der Anmeldung:
**04.05.88 Patentblatt 88/18**

(84) Benannte Vertragsstaaten:
**AT BE CH DE ES FR GB IT LI NL SE**

(71) Anmelder: **Gerd Schulz Fahrzeug- und
Container-Technik
Besselstrasse 9
D-2100 Hamburg 90(DE)**

(72) Erfinder: **Schulz, Gerd
Besselstrasse 9
D-2100 Hamburg 90(DE)**
Erfinder: **Hartleif, Hans-Peter
Rotbergskamp 20c
D-2100 Hamburg 90(DE)**

(74) Vertreter: **Eisenführ & Speiser
Martinistrasse 24
D-2800 Bremen 1(DE)**

(54) **Halterung für eine Radabdeckung.**

(57) Beschrieben wird eine Halterung für eine Radabdeckung (42), mit einem auf einer fahrzeugseitigen, zur Radachse parallelen Tragstange (5) festklemmbaren Befestigungselement (1) und Verbindungselementen zur Anbringung der Radabdeckung (42) an dem Befestigungselement (1), wobei das als zweiteilige Befestigungsschelle (3) ausgebildete Befestigungselement einen Schellenbügel (10) und einen gebogenen Schraubbolzen (20) umfaßt, die jeweils einen gewölbten bzw. gebogenen Mittelbereich (12) aufweisen, dessen Wölbung bzw. Biegung im wesentlichen der Umfangskontur der Tragstange (5) folgt, wobei weiterhin der Schellenbügel (10) mit Öffnungen (16, 18) versehene Endbereiche (14) aufweist und wobei die Enden (22, 28) des Schraubbolzens (20) im Einbauzustand der Befestigungsschelle (3) die Öffnungen (16, 18) der Endbereiche (14) durchsetzen.

EP 0 265 647 A1

## Halterung für eine Radabdeckung

Die Erfindung betrifft eine Halterung für eine Radabdeckung mit einem auf einer fahrzeugseitigen, zur Radachse parallelen Tragstange festklemmbaren Befestigungselement und Verbindungselementen zur Anbringung der Radabdeckung an dem Befestigungselement.

Eine solche Halterung ist aus dem DE-GM 7 628 148 bekannt. Sie umfaßt einen als Klemmstück ausgebildeten Formkörper mit einer Anlagefläche, an welcher die Radabdeckung (Kotflügel o.ä.) des Fahrzeugs angeschraubt wird. Durch den Formkörper erstreckt sich eine kreisrunde Bohrung, die zum Aufstecken des Formkörpers auf die Tragstange dient. Der Formkörper ist von einer Seite her bis zur Bohrung eingeschlitzt und kann durch Anziehen einer den Klemmschlitz durchsetzenden Schraube unter entsprechender Durchmesserverringerung der Bohrung auf der Tragstange festgeklemmt werden.

Während sich dieses Befestigungselement in der Praxis bewährt, weist es doch noch einige Verbesserungsmöglichkeiten auf.

Zum einen ist der Formkörper nur unter entsprechendem Aufwand mit der nötigen Maßgenauigkeit herstellbar. Vorzugsweise wird er gesenkgeschmiedet und muß dann noch nachbearbeitet werden. Außerdem wirkt der Formkörper bei Anziehen der Klemmschraube wie eine Zange auf die Tragstange, d. h. die kraftschlüssige und eine Verdrehung verhindernde Klemmberührung des Formkörpers mit der Tragstange erfolgt im wesentlichen an zwei gegenüberliegenden, vom Schlitz jeweils etwa um ein Viertel des Bohrungsumfangs entfernten Stellen. Dadurch ist ein sehr starkes Anziehen der Klemmschraube notwendig, um eine verdrehsichere Halterung der Radabdeckung an der Tragstange zu gewährleisten.

Aufgabe der Erfindung ist es, eine Halterung der eingangs genannten Art zu schaffen, die unaufwendiger herzustellen, einfacher zu montieren ist und eine bessere Verdrehsicherung der Radabdeckung gegenüber der Tragstange ermöglicht.

Zur Lösung dieser Aufgabe ist die Halterung der eingangs genannten Art erfindungsgemäß mit den im kennzeichnenden Teil des Anspruchs 1 definierten Merkmalen ausgestattet.

Vorteilhafte Ausgestaltungen der Erfindung sind in den Unteransprüchen 2 bis 5 angegeben.

Die erfindungsgemäße Halterung ist unaufwendig und einfach zu fertigen. Das Befestigungselement ist als zweiteilige Befestigungsschelle ausgebildet, deren Schellenbügel als kleines Gußstück ausgeführt werden kann, welches keiner Nachbearbeitung bedarf und an dessen Maßhaltigkeit keine hohen Ansprüche gestellt werden müssen. Den anderen Teil der Befestigungsschelle bildet ein einfacher handelsüblicher gekrümmter, vorzugsweise stählerner Schraubbolzen, der in seinem Mittelbereich so gebogen ist, daß der Mittelbereich weitgehend dieselbe Krümmung aufweist, wie die Umfangskontur der Tragstange. Die (im wesentlichen geraden) Enden des Schraubbolzens durchsetzen im Einbauzustand die mit entsprechenden Öffnungen versehenen Endbereiche des Schellenbügels, so daß die Befestigungsschelle nach Aufschrauben und Anziehen von nur einer Mutter auf das Gewindeende des Schraubbolzens die Tragstange im Klemmsitz umgreift. Die Montage ist dadurch denkbar einfach und schnell.

Dabei klemmt die Befestigungsschelle entweder einen Bereich des Kotflügels selbst oder aber vorzugsweise ein gesondertes Tragblech an der Tragstange fest und bewirkt dadurch die drehfeste Halterung der Radabdeckung an der Tragstange.

Das vorzugsweise verwendete Tragblech ist mit dem Kotflügel verschraubt oder auf andere Weise verbunden und folgt in seiner Hauptebene deren Außenkontur. Im mit dem Befestigungselement zusammenwirkenden Bereich ist das Tragblech jedoch soweit aus dieser Hauptebene ausgewölbt, daß der Schraubbolzen durch zwei im Tragblech beiderseits einer kleinen Einwölbung vorgesehene Öffnungen geführt werden kann. Dabei liegt der gebogene Mittelbereich des Schraubbolzens zwischen dem Kotflügel und dem Tragblech und umgreift die Einwölbung, während die Endbereiche des Schraubbolzens (Kopf-und Gewindebereich) auf der anderen Seite des Tragbleches liegen. Hier durchsetzen sie die Öffnungen in den Endbereichen des Schellenbügels, so daß beim Anziehen des Schraubbolzens einerseits der Schellenbügel und andererseits die zwischen dem Schraubbolzen und der Tragstange liegende Einwölbung des Tragblechs gegen die Tragstange gepreßt und an dieser festgeklemmt werden.

Diese Ausführung ist besonders montagefreundlich. Die gesamte Einheit kann vormontiert werden, so daß sie zur Montage der Radabdeckung nur noch bei entsprechend gelockerter Mutter auf die Tragstange aufgeschoben und nachfolgend die Mutter festgezogen werden muß. Der Schraubbolzen kann sich aufgrund seiner Krümmung beim Anziehen der Mutter nicht mitdrehen und muß nicht durch ein Werkzeug festgehalten werden. Die Mutter liegt frei zugänglich auf der radabgewandten Seite der Radabdeckung und ist dadurch für ein Werkzeug ohne Schwierigkeiten erreichbar.

Die Schraube trägt im festgeklemmten Zustand mit und erzeugt eine hohe Flächenpressung über praktisch den gesamten Umfang der Tragstange. Die Krafteinleitung von der Befestigungsschelle in die Tragstange erfolgt im wesentlichen tangential, was die Einleitung hoher Spannkräfte bei relativ geringer Belastung des Schraubbolzens ermöglicht.

Auf einfache Weise und mit unaufwendig herstellbaren Elementen wird so eine wesentlich verbesserte, drehsichere Halterung der Radabdeckung an der Tragstange erreicht.

Im folgenden wird eine bevorzugte Ausführungsform der Erfindung anhand der beigefügten Zeichnung näher erläutert. Es zeigen:

Fig. 1 eine schematische Seitenansicht einer erfindungsgemäßen Halterung; und

Fig. 2 eine Aufsicht gemäß Fig. 1, jedoch bei entferntem Schraubbolzen und weggelassener Radabdeckung.

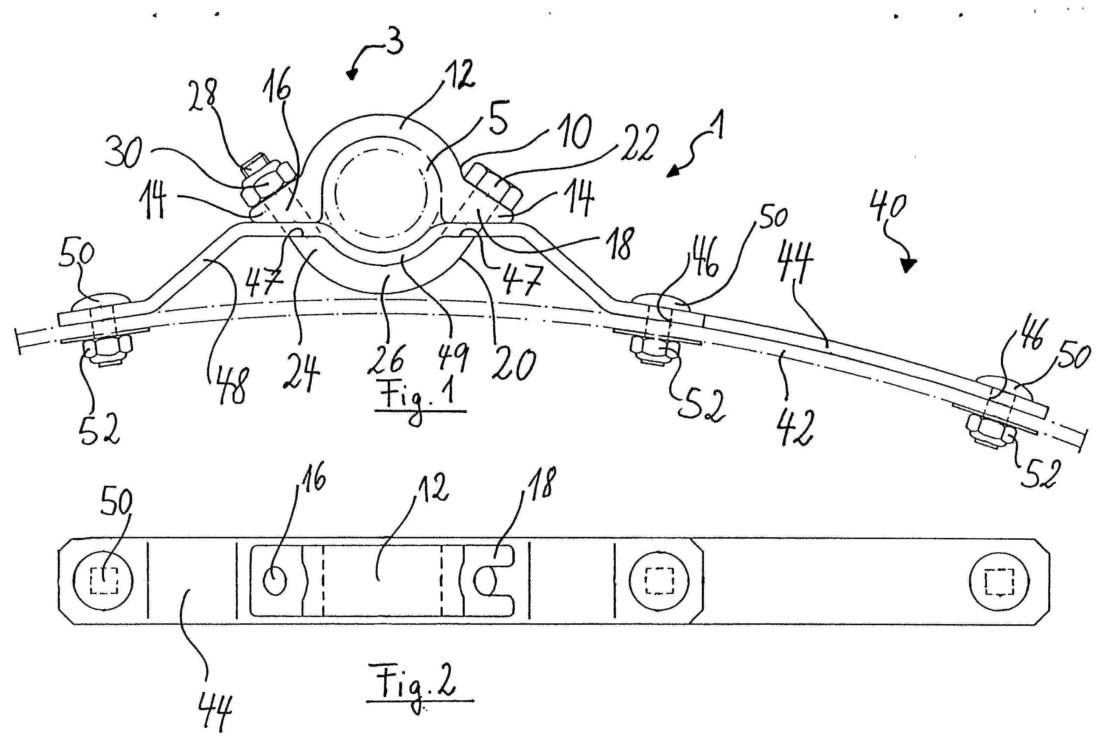

Wie Fig. 1 zeigt, umfaßt ein Befestigungselement 1 zur Halterung einer Radabdeckung 42 an einer fahrzeugseitigen, zur Radachse parallelen Tragstange 5 eine Befestigungsschelle 3, die einen Schellenbügel 10 und einen gebogenen Schraubbolzen 20 aufweist.

Der Schellenbügel 10 weist einen gewölbten Mittelbereich 12 auf. Die Krümmung der Innenumfangsfläche dieses gewölbten Mittelbereiches 12 entspricht im Ausführungsbeispiel der zylindrischen Umfangskontur der Tragstange 5, so daß der Schellenbügel 10, wie Fig. 1 veranschaulicht, die Tragstange 5 über einen Teil ihres Umfanges enganliegend umgreifen kann. Zu beiden Seiten des Mittelbereiches 12 ist der Schellenbügel 10 mit Endbereichen 14 versehen, die jeweils eine Öffnung 16, 18 aufweisen. Wie insbesondere Fig. 2 erkennen läßt, ist die Öffnung des einen Endbereichs als Durchbohrung 16 ausgebildet, während die Öffnung des anderen Endbereiches als Gabel 18 geformt ist.

Die Endbereiche 14 des Schellenbügels 10 weisen vom Mittelbereich 12 abstehende ebene Flächen auf, mit denen sie an einem später beschriebenen Tragblech 44 anliegen können und die in der in Fig. 1 erkennbaren Weise in entgegengesetzte Richtungen geneigt verlaufen. Die Mittelachsen der beiden Öffnungen 16, 18 verlaufen senkrecht zu den Oberflächen der beiden genannten ebenen Flächen.

Der den zweiten Teil der Befestigungsschelle 3 bildende gebogene Schraubbolzen 20 umfaßt einen Kopfbereich 22, an den sich ein Schaft 24 anschließt. Der Schaft 24 ist in seinem Mittelbereich 26 so gebogen, daß die Biegung ungefähr der umgriffenen Umfangskontur der Tragstange 5 entspricht. Jedoch ist die Biegung dieses Mittelbereiches 26 des Schraubbolzens 20 etwas weniger stark als die Krümmung der Innenumfangsfläche des gewölbten Mittelbereiches 12 des Schellenbügels 10, da der Schraubbolzen 20, wie später noch beschrieben wird, nicht direkt an der Tragstange 5 anliegen soll.

An dem gebogenen Mittelbereich 26 des Schraubbolzens 20 schließt sich an der dem Kopfbereich abgewandten Seite ein Gewindebereich 28 an, auf den eine Mutter 30 aufschraubbar ist. Der Gewindebereich 28 ist, wie auch der Kopfbereich 22, im wesentlichen gerade.

Die Längsachsen durch diese geraden Enden des Schraubbolzens 20 schneiden einander im gezeigten Ausführungsbeispiel nahe dem Mittelbereich 26 unter einem Winkel von ungefähr 75°; dabei sind die Enden des Schraubbolzens 20 durch die Öffnungen 16, 18 des Schellenbügels geführt, und der Kopfbereich 22 des Schraubbolzens 20 übergreift die Gabel 18, während der Gewindebereich 28 des Schraubbolzens 20 soweit aus der Bohrung 16 des anderen Endbereichs 14 des Schellenbügels 10 hervortritt, daß die Mutter 30 auf ihn aufgeschraubt werden kann.

Während die Befestigungsschelle 3 auch dazu dienen könnte, einen Kotflügel oder eine andere Radabdeckung unmittelbar an der Tragstange 5 festzuklemmen, ist bei der gezeigten Ausführungsform ein gesondertes Tragblech 44 vorgesehen, welches mit dem Kotflügel 42 durch Schloßschrauben 50 und Muttern 52 verbunden ist. Die Schloßschrauben 50 erstrecken sich durch Bohrungen 46 hindurch, welche sowohl das Tragblech 44 als auch den Kotflügel 42 durchsetzen.

Im Befestigungsbereich weist das Tragblech 44 einen Auswölbungsbereich 48 auf. Die Hauptebene des Tragbleches 44 folgt der Kontur der Radabdeckung bzw. des Kotflügels 42, wie insbesondere Fig. 1 deutlich zeigt; im Auswölbungsbereich 48 entfernt sich das Tragblech 44 jedoch soweit von dieser Hauptebene (und damit von dem gestrichelt gezeigten Kotflügel 42), daß der gekrümmte Schraubbolzen 20 zwischen dem Tragblech 44 und dem Kotflügel 42 hindurchgeführt werden kann.

Im Auswölbungsbereich 48 weist das Tragblech 44 zwei Bohrungen 47 auf, die beabstandet auf jeweils einer Seite einer kleinen Einwölbung 49 liegen. Der Verlauf der Einwölbung 49 ist der Umfangskontur der Tragstange 5 angepaßt.

Durch die Bohrungen 47 ist der Schraubbolzen 20 so geführt, daß sein gebogener Mittelbereich 26 die Einwölbung 49 des Tragblechs 44 umgreift und beim Anziehen der Mutter 30 gegen die Tragstange 5 preßt. Dabei wird der Schraubbolzen 20 seinerseits gegen die Einwölbung 49 des Tragbleches 44 gezogen, so daß der Schellenbügel 10, der Schraubbolzen 20 und das Tragblech 44 im drehsicheren Klemmsitz mit der Tragstange 5 verbunden sind.

Der Schellenbügel 10 ist vorzugsweise als Gußstück ausgebildet, während der gekrümmte Schraubbolzen 20 handelsüblich ist. Das Tragblech 44 ist ein einfaches Blechformteil.

**Ansprüche**

1. Halterung für eine Radabdeckung, mit einem auf einer fahrzeugseitigen, zur Radachse parallelen Tragstange festklemmbaren Befestigungselement und Verbindungselementen zur Anbringung der Radabdeckung an dem Befestigungselement, dadurch gekennzeichnet, daß

a) das als zweiteilige Befestigungsschelle (3) ausgebildete Befestigungselement (1) einen Schellenbügel (10) und einen gebogenen Schraubbolzen (20) umfaßt, die jeweils einen gewölbten bzw. gebogenen Mittelbereich (12 bzw. 26) aufweisen, dessen Wölbung bzw. Biegung im wesentlichen der Umfangskontur der Tragstange (5) folgt,

b) der Schellenbügel (10) mit Öffnungen (16, 18) versehene Endbereiche (14) aufweist

c) und die Enden (22, 28) des Schraubbolzens (20) im Einbauzustand der Befestigungsschelle (3) die Öffnungen (16, 18) der Endbereiche (14) durchsetzen.

2. Halterung nach Anspruch 1 mit einem Tragblech für die Radabdeckung, dadurch gekennzeichnet, daß der Schraubbolzen (20) so durch zwei beabstandete Bohrungen (47) des Tragblechs (44) geführt ist, daß seine Endbereiche (22, 28) auf derselben Seite des Tragbleches (44) liegen und eine zwischen den Bohrungen (47) liegende Einwölbung (49) des Tragbleches (44) zwischen sich und dem Tragrohr (5) einklemmt.

3. Halterung nach Anspruch 2, dadurch gekennzeichnet, daß das Tragblech (44) einen Auswölbungsbereich (48) aufweist, in welchem die Bohrungen (47) und die Einwölbung (49) vorgesehen sind, und der mindestens um die Summe der Dicken des Tragbleches (44) und des Schraubbolzens (20) aus der Tragblech-Hauptebene ausgewölbt ist.

4. Halterung nach einem der Ansprüche 1 bis 3, dadurch gekennzeichnet, daß die Öffnung des einen Schellenbügel-Endbereichs (14) als Bohrung (16) zur Aufnahme eines Gewindebereiches (28) des Schraubbolzens (20) an dessen einem Ende und die Öffnung des anderen Endbereichs (14) als Gabel (18) zum Einschieben des Kopfbereichs (22) des Schraubbolzens (20) ausgebildet ist.

5. Halterung nach einem der Ansprüche 1 bis 4, dadurch gekennzeichnet, daß der Schraubbolzen (20) so gebogen ist, daß die Längsachsen seiner im wesentlichen geraden Enden (22, 28) einander nahe dem Mittelbereich (26) unter einem Winkel zwischen 45° und 90°, vorzugsweise einem Winkel von ungefähr 75° schneiden.

6. Halterung nach einem der Ansprüche 1 bis 5, dadurch gekennzeichnet, daß die beiden Endbereiche (14) des Schellenbügels keilförmig ausgebildet sind, auf ihrer dem Tragblech (44) zugekehrten Seite jeweils eine, in einer gemeinsamen Ebene liegende gerade Unterfläche und auf ihrer anderen Seite je eine in Richtung auf den Mittelbereich (12) von außen her ansteigende, ebene Oberfläche aufweisen und daß die Mittelachse jeder Bohrung (16, 18) senkrecht zur zugeordneten Oberfläche verläuft.

3

28 16 12

30 14 5 10 22 1

50 18 50 40

47 46 44

48 24 26 49 20 52 42 46

52 Fig. 1 52

0 265 647

16 12 18

50

44 Fig.2

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 457 207 (BAWA BATZOLD & WAGNER) * Insgesamt * --- | 1-6 | B 62 D 25/16 |
| A | FR-A-2 495 090 (BAWA BATZOLD & WAGNER) * Figur 1 * --- | 2,3 | |
| A | DE-U-8 524 695 (KöVER) --- | | |
| A | GB-A-1 101 550 (DAIMLER-BENZ) --- | | |
| A | DE-U-8 609 090 (BÄWA BÄTZOLD & WAGNER) --- | | |
| D,A | DE-U-7 628 148 (SCHULZ) --- | | |
| P,X | DE-U-8 626 339 (SCHULZ)(08-01-1987) ----- | 1-6 | |

### RECHERCHIERTE SACHGEBIETE (Int. Cl.4)

B 62 D

Der vorliegende Recherchenbericht wurde für alle Patentansprüche erstellt

| Recherchenort | Abschlußdatum der Recherche | Prüfer |
|---|---|---|
| DEN HAAG | 27-01-1988 | VAN DER WAL W |

EPO FORM 1503 03.82 (P0403)